# EUROPEAN PATENT SPECIFICATION

(11) **EP 1 403 467 B1**
(45) Date of publication and mention of the grant of the patent: **20.01.2016**
(21) Application number: 03256133.4
(22) Date of filing: 29.09.2003
(51) Int. Cl.: F01D 17/16, F16B 41/00

(54) **Bumper system**
Stossfängersystem
Système de pare-chocs

(30) Priority: 30.09.2002 US 261471
(43) Date of publication of application: 31.03.2004
(73) Proprietor: United Technologies Corporation, Hartford, CT 06101 (US)
(72) Inventor: Pickens, John T., Middletown, CT 06457 (US); Alexander, Phillip, Colchester, CT 06415 (US); Bifulco, Anthony R., Ellington, CT 06029 (US); Cummings, Kevin J., West Hartford, CT 06110 (US)
(74) Representative: Hughes, Andrea Michelle

(56) References cited:
- EP-A- 0 375 593
- US-A- 4 812 106
- US-A- 5 387 080

## Description

### BACKGROUND OF THE INVENTION

The present invention relates to an improved shimable bumper system for use in a compressor variable vane system that fully traps the shim in case of lost screw preload and that has an anti-rotation feature.

The main components of a compressor variable vane system are the stator vanes, vane arms, synchronizing rings, bumpers, linkage system, and the actuator. The vane arms are used to control the incidence angle of the vanes in the compressor of gas turbine engines. The vanes are arranged as a stage set around the circumference of the compressor. The arm attaches to each vane spindle which rotates in a bearing mounted in the compressor case. The set of vanes are actuated by a circumferential synchronizing ring that rotates about the engine axis. The vane arm imparts motion from the synchronizing ring to the vane spindle. The linkage system and actuator imparts motion to the synchronizing ring. The bumper is used to control the concentricity and the deflection of the synchronizing ring throughout this motion by running at a pre-determined operating gap. Currently, thread adjustment and shimable adjustment are used to set this gap at assembly, taking into account the thermal resultant at operating temperature.

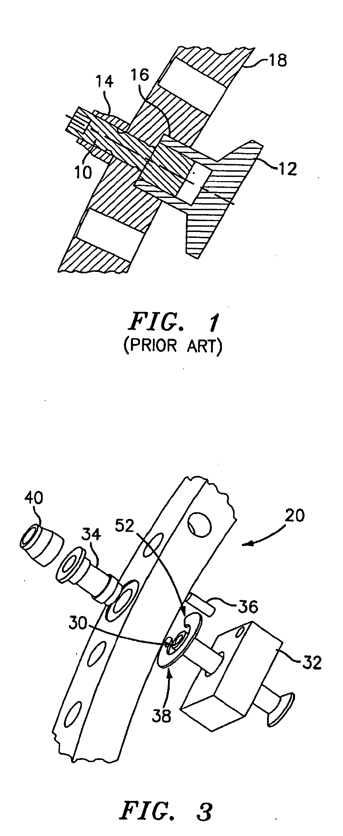

One current bumper configuration, shown in FIG. 1, uses thread adjustment to set the bumper gap. The configuration consists of a stud adjuster 10, a metallic bumper 12 with a bonded on composite liner, and a shear lock collar 14. The bumper 12 is anti-rotated via a matched milled feature 16 in the synchronizing ring 18. Such a configuration is disclosed in EP 0375593. There are two technical issues with this configuration. The first is that the load path is through the threads which results in thread wear which leads to an increase in bumper gaps. The second issue is the bonding of a composite liner to a metallic bumper housing. Disbonding of the composite liner could occur due to loading and thermal cycling. The dis-bond of the liner also leads to an increase of bumper gaps. Increased bumper gaps decrease the synchronizing ring concentricity and increases the synchronizing ring distortion which leads to an increase in vane angle variation and loss in stall margin.

US 4,812,106 discloses a plurality of pieces of material which have a relatively high coefficient of thermal expansion and which control the effective clearance between the control ring and the stator casing.

Thus, there is a need for a new bumper configuration.

### SUMMARY OF THE INVENTION

Accordingly, it is an object of the present invention in its preferred embodiments at least to provide an improved bumper system according to claim 1, which avoids thread wear that leads to an increase in bumper gaps.

It is a further object of the present invention in its preferred embodiments at least to provide an improved bumper system which avoids dis-bonding of a composite liner which can lead to an increase in bumper gaps.

It is still a further object of the present invention in its preferred embodiments at least to provide an improved bumper system which can be retrofitted onto current gas turbine engine hardware.

In accordance with the present invention, a bumper system for use with a compressor variable vane system broadly comprises a synchronizing ring, a bumper joined to the synchronizing ring, a shim for defining a gap between a bumper pad and the bumper, means for trapping the shim, and means for preventing rotation of the bumper relative to the synchronizing ring, the shim having a slot.

Other details of the bumper system of the present invention, as well as advantages attendant thereto, are set forth in the hollowing detailed description and the accompanying drawings wherein like reference numerals depict like elements.

### BRIEF DESCRIPTION OF THE DRAWINGS

FIG. 1 illustrates a prior art bumper system;
FIG. 2 illustrates a bumper system in accordance with the present invention;
FIG. 3 is an exploded view of the bumper system of FIG. 2;
FIG. 4 is a sectional view showing the anti-rotation feature of the bumper system of FIG. 2;
FIG. 5 is an exploded view of an alternative embodiment of a bumper system shown by way of background only;
FIG. 6 is a schematic representation of an alternative technique for trapping a shim used in the bumper systems of the present invention; and
FIG. 7 is a sectional view showing a bumper spaced from a bumper pad.

### DETAILED DESCRIPTION OF THE PREFERRED EMBODIMENT(S)

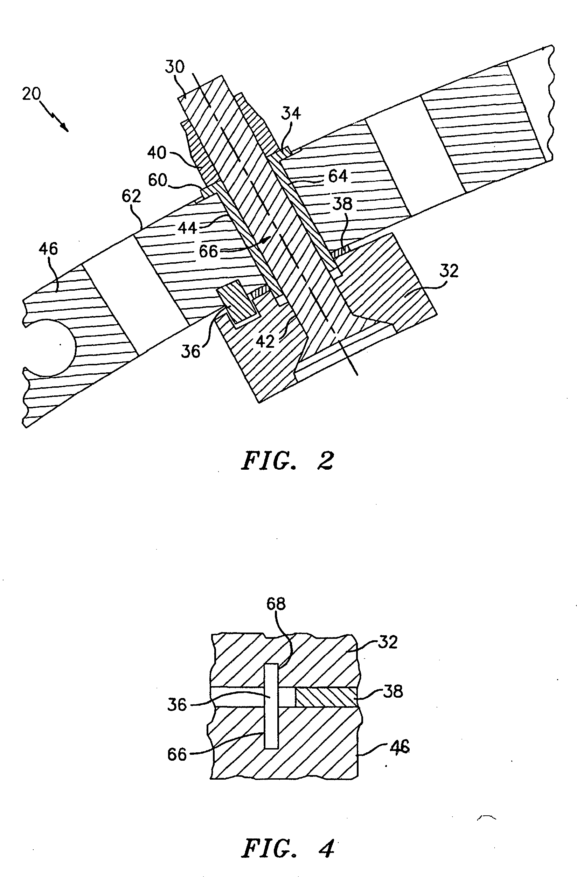

Referring now to the drawings, FIGS. 2 through 4 illustrate a bumper system for use on a gas turbine engine in accordance with the present invention. The bumper system uses shims to set the bumper gaps. As shown in FIGS. 2 through 4, the bumper system 20 includes a fastener 30, such as a screw or a bolt having a thread at one end, a one-piece composite bumper 32, a shim-lock sleeve 34, a dowel pin 36, a shim 38, and a threaded shear lock collar 40 for engaging the threaded end of the fastener 30. The fastener 30 passes through a bore 42 in the bumper 32 and through a hole 44 in the synchronizing ring 46. As can be seen from FIG. 2, the hole 44 has a diameter greater than the diameter of the fastener 30.

A suitable composite material for the bumper 32 requires low coefficient of friction (lubricity) to minimize the frictional loading in the system. The material also needs to have dimensional stability and wear resistance to maintain running gaps to minimize the vane angle error. The temperature capability and material strength (compression, torsional, and fracture toughness) must be sufficient to meet assembly and operation conditions.

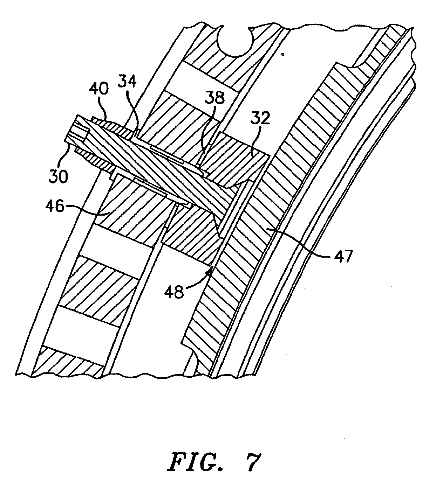

As shown in FIG. 7, the shim 38 is used to set the gap 48 between the bumper 32 and a bumper pad 47 which is a machined feature on the high pressure compressor case. As shown in FIG. 3, the shim 38 has a slot 52 which allows the shim 38 to slide over the diameter of the fastener 30. Additionally, the shim 38 has an inner diameter greater than the diameter of the fastener 30.

The shim-lock sleeve 34 has a shoulder portion 60 which abuts the surface 62 of the synchronizing ring 46 and a cylindrical shaft portion 64 having an opening 66 through which the fastener 30 passes. The cylindrical shaft portion 64 has a length greater than the thickness of the synchronizing ring 46 so that the shaft portion 64 extends into the shim 38. The slot 52 has width which is less than the diameter of the cylindrical shaft portion 64. As a result, the shim 38 is fully trapped by the sleeve 34.

Referring now to FIG. 4, a dowel pin 36 fits into a hole 66 in the synchronizing ring 46 and a hole 68 in the bumper 32 and serves to prevent rotation of the bumper system. Because of the holes 66 and 68, the dowel pin 36 is fully trapped if there is a loss of screw pre-load.

After all of the elements have been positioned in the proper manner, the shear lock collar 40 is threaded onto the fastener 30 so that the shear lock collar 40 abuts the shoulder portion 60 of the shim lock sleeve 34.

One of the advantages to the bumper system of the present invention is that the primary load path is changed so that it goes through the synchronizing ring, not the threads, hence eliminating thread wear. The use of a one-piece composite bumper eliminates the dis-bond concern. Another advantage to the system of the present invention is that the shim remains fully trapped even if there is a loss of screw preload. Further, the shim is circular which allows symmetrical assembly and the shim lock sleeve is mistake proof during assembly. Other advantages include cost and weight reductions with respect to current systems and production benefits.

While the bumper system of FIGS. 2 through 4 has been illustrated as having one shim, more than one shim could be used if desired.

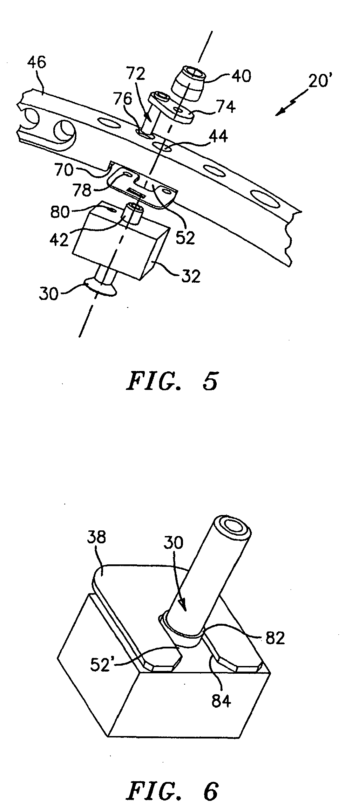

Referring now to FIG. 5, an alternative bumper system 20' is illustrated, by way of background only. In this system, the synchronizing ring 46 is provided with a groove 70 and a hole 76. The shim 38 fits within the groove 70. As before, a fastener 30 and a lock collar 40 are used to mount a one-piece composite bumper 32 to the synchronizing ring 46. The fastener 30 passes through a bore 42 in the bumper 32, through the slot 52 in the shim 38, and then through the hole 44 in the synchronizing ring 46. As before, the shim 38 is used to provide a gap between the bumper 32 and a bumper pad 47. Also, the alternative bumper system 20' could use more than one shim 38.

To prevent rotation of the bumper 32 during use and to trap the shim 38, a pin 72 with a washer 74 is provided. The pin 72 is inserted into a through bore 76 in the synchronizing ring, into a mating engagement bore 78 in the shim 38 and then into a receiving bore 80 in the bumper 32. The pin 72 may be threaded at its end to engage and mate with a thread in the bore 80. When the pin 72 is engaged with the bumper 32, the washer 74 abuts against a surface of the synchronizing ring 46.

FIG. 6 illustrates an alternative technique for trapping the shims 38 used in the bumper systems 20 and 20'. In this technique, the fastener 30 is provided with a shoulder 82. After the fastener 30 has been inserted into the bumper 32 so that it extends out the bumper, the shim 38 and a substantially U-shaped slot 52' are positioned over the fastener 30 so that the slot side walls 84 of the shim engage and abut the shoulder 82. To fully trap the shim 38, the dimension between the side walls 84 should be less than the diameter of the fastener 30 in the region of the shoulder 82.

## Claims

1. A bumper system (20;20') for use with a compressor variable vane system, said bumper system comprising:
a synchronizing ring (46);
a bumper (32) joined to said synchronizing ring (46) ;
a shim (38) for defining a gap between a bumper pad (47) and said bumper (32); and
means for trapping the shim (38); and
means for preventing rotation of said bumper (32) relative to said synchronizing ring (46),
**characterised in that** said shim has a slot; and **in that**
said means for trapping the shim (38) comprises a shim-lockable sleeve (34) or a shoulder (82) of a fastener (30) engaged with side walls of the slot, wherein the shim-lockable sleeve or the shoulder has a diameter greater than a width dimension of said slot (52).

2. A bumper system according to claim 1, wherein said rotation preventing means comprises a first hole (66) in said synchronizing ring (46), a second hole (68) in said bumper (32), and a dowel pin (36) fitting in said first and second holes.

3. A bumper system according to claim 1, further comprising:
said synchronizing ring (46) having an aperture (44) extending therethrough; and
said sleeve (34) having a cylindrical portion (64) which passes through said aperture (44) and a shoulder portion (60) which abuts a surface (62) of said synchronizing ring (46).

4. A bumper system according to claim 3, further comprising:
said cylindrical portion (64) of said sleeve (34) being hollow;
said bumper (32) having a bore (42);
the fastener (30) passing through said bore (42) in said bumper (32) and said hollow cylindrical portion (64); and
a collar (40) for engaging and locking said fastener.

5. A bumper system according to claim 1, wherein said slot (52') is substantially U-shaped and wherein said fastener (30) passes through a hole in said bumper (32) and secures said bumper (32) to said synchronizing ring (46).

6. A bumper system according to any preceding claim, wherein said bumper (32) is a one-piece composite bumper.

## Patentansprüche

1. Stoßfängersystem (20;20') zur Verwendung mit einem verstellbaren Verdichterleitschaufelsystem, wobei das Stoßfängersystem Folgendes umfasst:
einen Synchronring (46);
einen Stoßfänger (32), der mit dem Synchronring (46) verbunden ist;
eine Zwischenlage (38) zum Festlegen eines Spalts zwischen einem Stoßfängerpad (47) und dem Stoßdämpfer (32); und
Mittel zum Einschließen der Zwischenlage (38); und
Mittel zum Verhindern einer Drehung des Stoßfängers (32) bezüglich des Synchronrings (46),
**dadurch gekennzeichnet, dass** die Zwischenlage einen Schlitz aufweist; und dadurch dass
das Mittel zum Einschließen der Zwischenlage (38) eine Hülse (34) zum Sperren der Zwischenlage oder einen Ansatz (82) eines Befestigungsteils (30) aufweist, die bzw. der in Seitenwände des Schlitzes eingreift, wobei die Hülse zum Sperren der Zwischenlage oder der Ansatz einen Durchmesser aufweist, der größer als eine Breitenabmessung des Schlitzes (52) ist.

2. Stoßfängersystem nach Anspruch 1, wobei das Mittel zum Verhindern der Drehung ein erstes Loch (66) in dem Synchronring (46), ein zweites Loch (68) in dem Stoßfänger (32) und einen Passstift (36) aufweist, der in das erste und das zweite Loch passt.

3. Stoßfängersystem nach Anspruch 1, das ferner Folgendes umfasst:
den Synchronring (46), der eine Öffnung (44) aufweist, die sich durch diesen erstreckt; und
die Hülse (34), die einen zylinderförmigen Teil (64) aufweist, der durch die Öffnung (44) verläuft, und einen Ansatzteil (60), der an eine Oberfläche (62) des Synchronrings (46) angrenzt.

4. Stoßfängersystem nach Anspruch 3, das ferner Folgendes umfasst:
den zylinderförmige Teil (64) der Hülse (34), der hohl ist;
den Stoßfänger (32), der eine Bohrung (42) aufweist;
das Befestigungsteil (30), das durch die Bohrung (42) in dem Stoßfänger (32) und den hohlen zylinderförmigen Teil (64) verläuft; und
einen Kragen (40) zum In-Eingriff-Bringen mit dem Befestigungsteil und Sperren desselben.

5. Stoßfängersystem nach Anspruch 1, wobei der Schlitz (52') im Wesentlichen U-förmig ist und wobei das Befestigungsteil (30) durch ein Loch in dem Stoßfänger (32) verläuft und den Stoßfänger (32) an dem Synchronring (46) befestigt.

6. Stoßfängersystem nach einem der vorhergehenden Ansprüche, wobei der Stoßfänger (32) ein einteiliger Verbundstoßfänger ist.

## Revendications

1. Système de pare-chocs (20 ; 20') utilisé avec un système à aubes variables de compresseur, ledit système de pare-chocs comprenant :
une bague de synchronisation (46) ;
un pare-chocs (32) lié à ladite bague de synchronisation (46) ;
une cale (38) servant à définir un intervalle entre un tampon de pare-chocs (47) et ledit pare-chocs (32) ; et
un moyen servant à coincer la cale (38) ; et
un moyen servant à empêcher la rotation dudit pare-chocs (32) par rapport à ladite bague de synchronisation (46),
**caractérisé en ce que** ladite cale comporte une fente ; et **en ce que**
ledit moyen de coinçage de la cale (38) comprend une gaine verrouillable par la cale (34) ou un épaulement (82) d'une attache (30) engagée avec les parois latérales de la fente, la gaine verrouillable par la cale ou l'épaulement ayant un diamètre supérieur à une dimension de largeur de ladite fente (52).

2. Système de pare-chocs selon la revendication 1, dans lequel ledit moyen empêchant la rotation comprend un premier trou (66) dans ladite bague de synchronisation (46), un deuxième trou (68) dans ledit pare-chocs (32) et un goujon d'emboîtement (36) logé dans lesdits premier et deuxième trous.

3. Système de pare-chocs selon la revendication 1, comprenant en outre :
le fait que ladite bague de synchronisation (46) a une ouverture (44) s'étendant à travers eux ; et
le fait que ladite gaine (34) comporte une partie cylindrique (64) qui traverse ladite ouverture (44) et une partie à épaulement (60) qui vient buter contre une surface (62) de ladite bague de synchronisation (46).

4. Système de pare-chocs selon la revendication 3, comprenant en outre :
le fait que ladite partie cylindrique (64) de ladite gaine (34) est creuse ;
ledit pare-chocs (32) comportant un trou (42) ;
l'attache (30) traversant ledit trou (42) dans ledit pare-chocs (32) et ladite partie cylindrique creuse (64) ; et
un collier (40) servant à engager et à verrouiller ladite attache.

5. Système de pare-chocs selon la revendication 1, dans lequel ladite fente (52') est sensiblement en forme de U, et où ladite attache (30) traverse un trou dans ledit pare-chocs (32) et attache ledit pare-chocs (32) à ladite bague de synchronisation (46).

6. Système de pare-chocs selon l'une quelconque des revendications précédentes, dans lequel ledit pare-chocs (32) est un pare-chocs composite d'une seule pièce.
